Europäisches Patentamt

European Patent Office

Office européen des brevets

(11) Publication number: **0 349 461**
**A2**

## EUROPEAN PATENT APPLICATION

(21) Application number: **89480093.7**

(22) Date of filing: **07.06.89**

(51) Int. Cl.5: **G 06 F 15/20**

(30) Priority: **01.07.88 US 217903**

(43) Date of publication of application:
**03.01.90 Bulletin 90/01**

(84) Designated Contracting States: **DE FR GB**

(71) Applicant: **International Business Machines Corporation
Old Orchard Road
Armonk, N.Y. 10504 (US)**

(72) Inventor: **Barker, Barbara Ann
2800 Carmel Drive
Round Rock Texas 76664 (US)**

**Edel, Thomas R.
9410 Topridge Drive
Austin Texas 78750 (US)**

**Stark, Jeffrey A.
2905 Valleyview Drive
Grapevine Texas 76051 (US)**

(74) Representative: **Tubiana, Max
Compagnie IBM France Département de Propriété
Intellectuelle
F-06610 La Gaude (FR)**

(54) **Utilization of a presentation document structure for interchange.**

(57) A method is disclosed for utilizing a general layout structure of a document which contains relationships within its layout constructs that offer choices when creating the document and conforming instances of logical elements with the general layout structure, taking in to account specific device characteristics, to generate the final-form document. The relationships are defined as expressions similar to those existing in general logical document structure definitions. Thus, an intermediate phase of document interchange between revision and final-form is introduced which saves data transmission time and gives the receiver some flexibility in presentation options while still conforming to a general layout definition. Further, the general layout definition may be used by a receiver to optimize its processing by identifying the possible layout presentation constructs appearing in the subsequent specific instance of the conforming document.

EP 0 349 461 A2

## Description

## UTILIZATION OF A PRESENTATION DOCUMENT STRUCTURE FOR INTERCHANGE

### BACKGROUND OF THE INVENTION

### Field of the Invention

The present invention generally relates to the electronic interchange of documents in a digital communications network and, more particularly, to a procedure for the generation of a presentation document structure which conforms to a general layout structure, this presentation document structure being processable at a receiving device or end user.

### Description of the Prior Art

There are three major classifications of a document in electronic data processing systems. These are the revisable document, the presentation or final-form document and the resource document. The content of the document determines its intent, and currently unique data streams, specific to each classification, exist for each document type. Examples include IBM's Revisable Format Document Content Architecture (RFTDCA) and IBM's Final Form Document Content Architecture (FFTDCA).

Revisable-form documents provide a model definition of the formatting intent of elements within the document with the characteristic of being easily changed. A revisable-form document consists of data and information which directs the presentation of the data. These declarations accompany the document in its revisable-form, and the declarations can be modified at any time. Some aspects of a formatting declaration are the page width, page length, and page numbering scheme used in the document. Based on the document specifications, one or more pages may be generated from the space requirements of the object data assigned to the areas defined in the formatting specifications. The process of revising a document may cause the space requirements of the object data to increase or decrease the number of resultant pages.

Final-form documents provide explicit presentation characteristics for document elements. The logical intent for various elements shows up in the presentation characteristics of the displayed document. Final-form documents are difficult to revise. A data stream that contains a final-form document is meant to be processed sequentially from beginning to end. The general layout structure of the document determines the presentation form of all data objects that are contained within the document.

When a document is transformed from revisable- form to final-form, the appropriate logical formatting declarations specified within the revisable-form document are converted to presentation form declarations within the final-form document. These declarations are imbedded within the document where they are needed in order to format the document. A final-form document can be interpreted by output servers such as Spool Writers that do not contain the logic necessary to interpret revisable-form document constructs.

Documents contained in a final-form data stream can be printed on different printers or viewed on different display screens, each producing the same document content in the same format as the others, within the capabilities of the device. The final-form document can also reference resources that are to be included with the presentation document. The resources exist externally to the document and may reside on a direct access storage device (DASD) library.

A resource document contains objects that may be stored in a DASD library for subsequent reference in a revisable or final-form document, or resource documents can be defined for some other purpose. Resource objects in data stream may consist of various items such as image objects, presentation text objects, revisable text objects, pages, fonts, and the like. Resources may be referenced repeatedly from with a presentation or revision document and are available to any application (e.g., document composer/ processor) that possesses the resource name and library accessibility..

The International Standards Organization (ISO) has defined standards for document processing and interchange. Specifically, the Standard Generalized Markup Language (SGML), publication 8879, and Office Document Architecture /Office Document Interchange Facility (ODA/ODIF), publication 8613, are two such standards. SGML is a representation language for character text and can be used to define the specifications for publishing systems. Generic markup, that is, identification of the role of document elements rather than how to present those elements, is the basis of SGML. SGML is also used to interchange text documents, but since non-text data, such as scanned images and graphics, can coexist with text data in a document, the requirement to interchange documents containing non-text data is not totally addressed by SGML. This requirement is more appropriately handled by ODA.

ODA is a method of describing document structures and all types of text and non-text information that are to be included in a document. This structured description is referred to as an architecture, and the representation of the document is in a form suitable for interchange. The encoding of ODA for interchange is defined in a serial form which is a data stream. An ODA document can contain scanned images and graphics data as well as character text integrated into one consistent data stream. ODA allows for control of the formatting process, not by embedding formatting commands, but by specifying attributes called layout and presentation directives, that are associated with objects defined by the document structure description. The specification of logical elements within a document are referred to as specific "instances" of the logical elements. These directives are grouped together to form layout and presentation styles which, in turn, can be referenced by one or more objects in the document structure. ODA styles can be local or external to a document, but the interpretation of style attributes and values is explicitly controlled by the ODA standard. There is no explicit link from a point in an ODA data stream to a location in a style specification. The creator of an ODA document can augment the style specification by embedding user defined attribute names and values within the ODA object descriptions. User defined attributes specify application dependent function that is to be applied to an ODA object during the document processing phase. This information is meaningful only within the creating application, and not interpretable by an arbitrary end user.

In a document interchange environment, there is an unsatisfied requirement for a document's logical structure definition to be "backed up" with a parallel general layout structure specification defining choices for presentation semantics associated with logical elements occurring in a data stream. This allows the generation of a conforming final-form document at application nodes anywhere between the creating and final receiving node. It is preferable in document interchange to delay the generation of a final-form document as close to the end receiver as possible. This is because the characterization of the end use devices are best known by the ultimate document receiver.

A similar objective has been accomplished in the prior art for display screen management, as disclosed in U.S. Patent No. 4,586,158 issued to Richard T. Brandle for "Screen Management System". This system provides for the efficient on-line and interactive application program utilization of an assortment of devices calling for different screen characteristics. An application programmer writes screen definitions for a particular device to be used. These definitions are stored externally to the application program and are used to define the quantity, order and placement of the application program's information on the screen. The application program provides the services to generate and process each data element which can be presented. These services are used by a mapping system in conjunction with the screen definition to generate and process a device dependent data stream.

While the Brandle screen management system provides a particularly flexible system for displaying information on a screen, that general concept is not readily translated to the generation of documents by end users or devices, such as printers, which have varying specific presentation characteristics.

## SUMMARY OF THE INVENTION

It is therefore an object of the present invention to utilize a general layout structure definition that permits presentation choices for creating varying instances of a final-form document, each of said instances conforming to the general layout structures of a document.

According to the invention, each instance of a document logical element occurring in a document data stream is interpreted and tested to determine if it conforms to a general logical document structure. If choices exist for the format of an interpreted instance of a logical element in the general layout structure definition, the specific characteristics of the final-form receivers are determined and the "permissible" layout constructs are selected from the general layout structure associated with the particular logical element instance being processed. If the final-form receiver is a specific class of device server (e.g., a print spooler), the device characteristics are matched with the permitted layout constructs associated with the logical element instance and the final-form instance of the data stream construct is generated. On the other hand, if the final-form receiver is not a specific class device server (e.g., a mail message receiver), the presentation characteristics of the interchange receiver are matched with the permitted presentation constructs of the logical element instance and the final-form instance of the interchange data stream construct is generated.

The ability to define an intermediate phase of a document between revision and final-form allows a final-form document generating device to make presentation choices from the general presentation layout structure definition. Since choices are possible, the probability of final-form document fidelity is enhanced for a wide variety of end user devices having varying format characteristics. Since the specific instance of a presentation document does need not be transmitted in document interchange in order to produce a conforming final-form document, data transmission time is saved and the receiver is provided with flexibility in presentation options not heretofore known.

## BRIEF DESCRIPTION OF THE DRAWINGS

The foregoing and other objects, aspects and advantages of the invention will be better understood from the following detailed description of a preferred embodiment of the invention with reference to the drawings, in which:

Figures 1A to 1G illustrate various page presentation styles associated with logical elements in a document and, more particularly, Figure 1A illustrates a Title page, Figure 1B illustrates an Abstract page, Figure 1C illustrates a Preface page, Figure 1D illustrates a Table of Contents page, Figure 1E illustrates a Table of Figures page, Figure 1F illustrates a Body page, and Figure 1G illustrates an Index page;

Figure 2 is a block diagram showing a general presentation document structure definition schematic that is associated with various logical elements appearing in the general logical document structure;

Figure 3 is a block diagram showing the relationship of document structures which contribute to the definition of the final-form document; and

Figure 4 is a flow chart showing the logic of the procedure according to the invention which matches the permissable layout parameters of an interchange data stream with the final-form characteristics of a specific class device or a formatted interchange data stream intended for final-form receivers such as electronic mail.

## DETAILED DESCRIPTION OF A PREFERRED EMBODIMENT OF THE INVENTION

How data appears on a presentation medium is governed by a general layout structure definition that says, for example, each presentation medium contains two pages on each side of a duplexed medium. Each page in turn may contain "n" areas containing text and/or image data objects. All pages are rotated "r" degrees and all object areas have an orientation of zero degrees relative to the page origin. Layout relationships are defined in a manner such that a processor of the data stream may compare given instances of layout directives occurring within the document to determine whether the occurrence of a given layout directive conforms to the document's governing layout structure definition. Note that a document's layout structure can contain expressions which offer choices in presentation format. Thus, a specific instance of a particular layout construct could be a page size of 8 1/2 x 11 inches or 10 x 12 inches and still conform to the general layout document structure specification. The general layout structure of a document can be defined as a separate construct, distinct from the logical structure and data objects so that changes in any of the three entities have no affect on any of the others. Thus, the same data object could appear in different documents with an entirely different layout appearance.

Data objects also possess layout functions. This is accomplished by defining data format constructs that only apply to particular data types. Outside of the data object, the presentation layout structure may direct that a given data object is to be positioned within an area that is offset from a page origin. However, the data object for text data specifies the spacing between lines, the size of white space appearing between words, etc.

The permitted presentation characteristics for pages, areas on pages and data within page areas can be defined in a hierarchical layout structure completely independent from a document logical structure, as described in the co-pending European applications Nos. 89480010.1 and 89480003.6 Relationships among a document's presentation page styles may indicate attributes such as the size of the pages, areas within pages, their orientation, etc. Layout structures may also be defined such that expressions offer choices for instances of a specific layout instance.

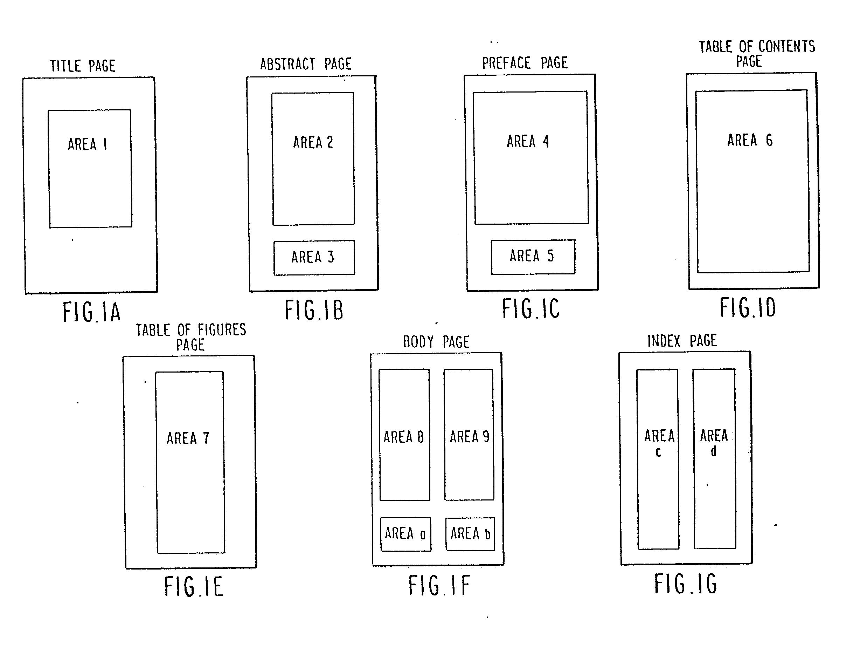

Figures 1A to 1G show samples of various page presentation styles associated with different logical document elements.

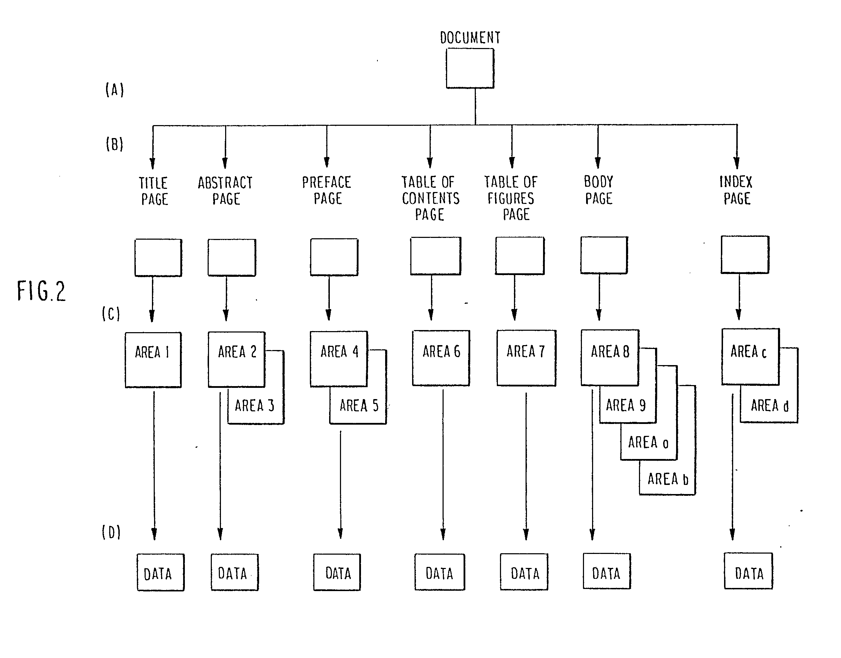

Figure 2 is one sample schematic representation of the hierarchical presentation structure to which the various page presentation styles conform. The interpretation of Figure 2 marked by annotations A, B, C, and D is as follows:

1. Annotation A -- The elements comprising a document's logical structure are linked to their permitted page presentation characteristics which describe attributes such as the page's size, orientation, medium offset, medium presentation side (e.g., front/back), etc.

2. Annotation B -- The permitted occurrence for each page style is associated with a particular page layout construct. For example, the number of Body pages in a document may have an occurrence range of ten to fifteen. Fonts and medium size or even Body data truncation could be used to accommodate this page occurrence limitation.

3. Annotation C -- Each page presentation style contains the presentation attributes for areas that it contains. The relationship of areas within a page may indicate, for example, that area eight must occur before area a on the Body page. This may occur because "footnote" area a is positioned relative to "body" area eight.

4. Annotation D -- The data content of areas is determined by linking particular data type(s) to particular presentation areas. Note that the formatting characteristics for data is unique to particular data types.

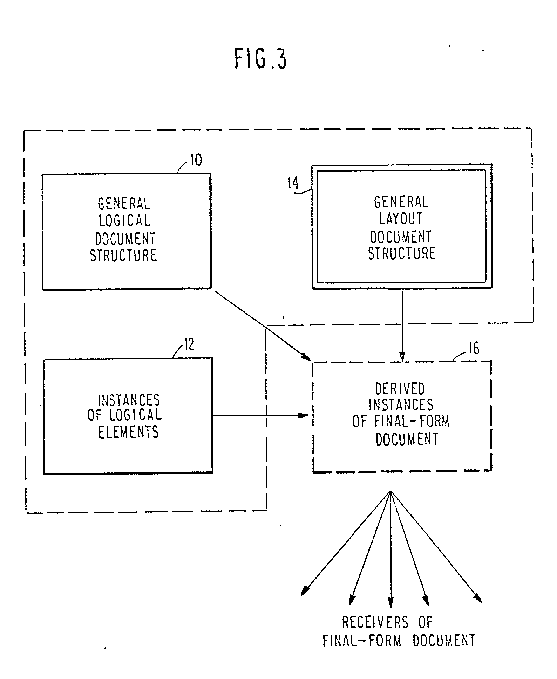

Figure 3 shows that a final-form document (block 16) can be derived from other document structures, i.e., logical element instance (block 12), general layout document structure (block 14) and the general logical document structure. These other document structures can be transmitted with a document data stream to a receiver. The receiver now has greater flexibility in creating a final-form document conforming to the presentation characteristics described in the general layout document structure definition. For example, choices may exist for the size of a body page (e.g., 8 1/2 x 11 or 10 x 12). This gives a receiver the ability to match the characteristics of the end use presentation device (e.g., a printer with certain sheet size characteristics) while still conforming to the general presentation layout structure definition.

In today's document interchange environment, the probability of creating a processable final-form document that conforms to specified presentation characteristics is enhanced by the definition of a general layout structure which contains "choices" for presentation parameters in a final-form document. "Processable" in this context means the capability to understand and act upon document formatting directives. The specific instance of a presentation document can thus occur as late as possible in a document presentation cycle while still maintaining conformance to presentation intent which is specified in this general structure.

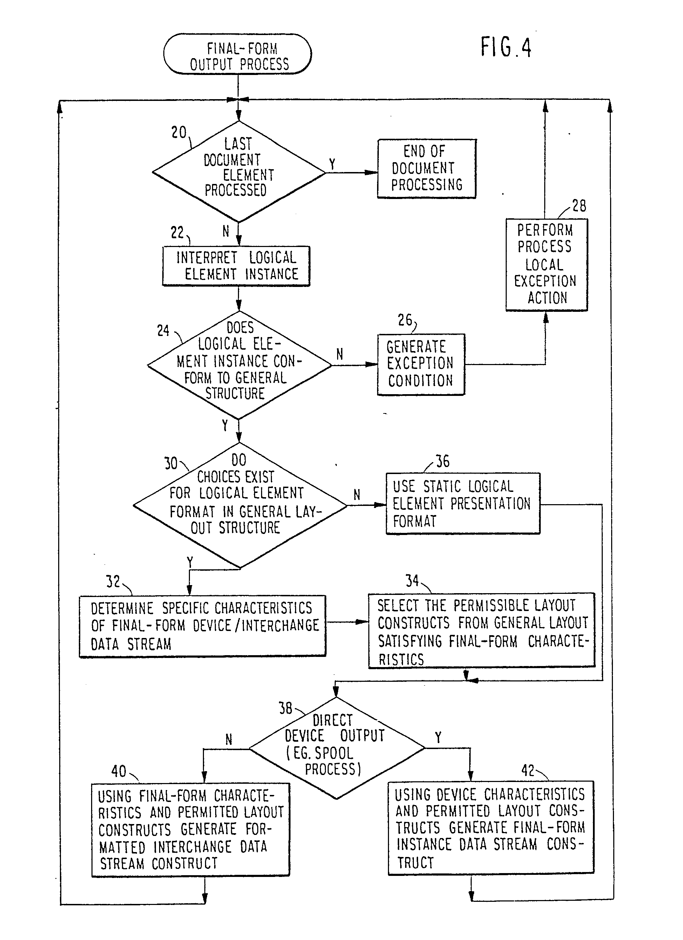

Referring now to Figure 4, there is shown a flow chart of a final-form output process according to the present invention. The process begins by testing, in decision block 20, an input document element to determine if it is the last element processed. If not, the instance of the logical element is interpreted in function block 22. An instance of a logic element is defined to be a permitted occurrence of the logical element functioning within the constraints specified for all logical document elements in the general logical document structure. The logical element instance is then tested in decision block 24 to determine if it conforms to the general logical structure. If it does not, the process branches to function block 26 where an exception condition is generated and then to function block 28 where the local exception action is processed before control is returned to decision block 20.

Assuming that the logical element instance conforms to the general structure as determined by the test performed in decision block 24, a second test is made in decision block 30 to determine if choices exist for logical element format in the general layout structure. If so, the specific characteristics of final-form device/interchange data stream are determined in function block 32. Then, in function block 34, the "permissable" layout constructs satisfying the final-form characteristics are selected from the general layout structure. "Permissable" layout constructs may be a choice of page sizes, number and size of presentation areas within a page (e.g., single or multi-column), paragraph spacing, etc. On the other hand, if there are no choices of the logical element in the general layout as determined in the test made in decision block 30, the static logical element presentation format is used as indicated in function block 36.

At this point, a test is made in decision block 38 to determine if the output is to a specific class of device. If not, the final-form characteristics and permitted layout constructs are used to generate formatted interchange data stream constructs in function block 40 before control returns to decision block 20. If so, the device characteristics and permitted layout constructs are used to generate the device data stream constructs in function block 42 before control returns to decision block 20.

When all the elements in the document have been processed, the test performed in decision block 20 will be true. At this point, the processing is complete and the procedure ends.

The following pseudocode implements the process that matches general layout parameters with the final-form characteristics of a device or an interchange data stream receiver illustrated by the flow chart of Figure 4. A programmer of ordinary skill in the art can write source code from the pseudocode in any desired language (e.g., Pascal, C, etc.) from which object code can be derived by a compiler.

DO: Get next Document Logical Element

Interpret the Instance of a Logical Element occurring in the document data stream.

IF: Instance of Logical Element Conforms to the General Logical Document Structure THEN:

IF: Choices exist for the format of the instance of this Logical Element in the General Layout Structure Definition THEN:

A. Determine the specific characteristics of the Final-Form receiver(s). For example,

1. Processes which function as a device server would determine the size of the paper/screen, whether the device supports tumble duplexing, page rotation, proportional fonts, etc.

2. Processes which function as an inter-change formatter and document distributer would determine the common presentation characteristics of the eventual document receivers so that the formatted document would be processable by document receivers while maintaining presentation intent.

B. Select the "permissible" layout constructs from the General Layout Structure associated with the particular logical element instance being processed.

ELSE: Use the static presentation definition for this logical element.

ENDIF:

IF: Final-Form receiver is a device server THEN:

```
    Match the device characteristics with the permitted
    layout constructs of this logical element instance and
    generate the device data stream construct.
  ELSE:
    Match the presentation characteristics of interchange
    receivers with the permitted layout constructs of this
    logical element instance and generate the interchange
    data stream construct.
  ENDIF:
ELSE: Generate exception condition and perform process local
  exception action (e.g., issue error message, ignore
  non-conforming logical element instance, etc.)
ENDIF:
UNTIL: All Logical Element Instances are Processed Perform End
of Document Processing
ENDO:
```

The invention has several important advantages. First, the specific instance of a presentation document need not be transmitted in document interchange in order to produce a conforming final form document. Varying specific presentation instances may be generated from the layout document structure definition while maintaining presentation fidelity. This saves data transmission time and gives the receiver some flexibility in presentation options while still conforming to a general layout definition. In addition, the general layout definition may be used by a receiver to optimize processing by identifying in a condensed form the possible layout presentation constructs appearing in the subsequent specific instance of the conforming document.

While the invention has been described in terms of a specific preferred embodiment, those skilled in the art will recognize that the invention may be practiced with modification within the spirit and scope of the appended claims.

## Claims

1. A process for generating final-form document characteristics at an end user or device comprising the steps of:

transmitting an interchange data stream comprising a general layout document structure and specific instances of logical elements of the document to one or more end users or devices having varying specific presentation characteristics; and

interpreting instances of logical elements in a data stream at an end user or device taking into account the presentation characteristics of the end user or device to produce a final-form document conforming to the general layout document structure.

2. The process recited in claim 1 wherein the step of interpreting comprises the steps of:

testing each logical element instance to determine if it conforms to a general layout structure definition;

determining if choices exist for the format of the instance of the logical element in the general layout structure definition; and

selecting the permissible layout constructs from the general layout structure definition which satisfy final-form characteristics.

3. The process recited in claim 2 further comprising the steps of:

if the final-form receiver is a device server, matching the device characteristics with the permitted layout constructs of the logical element instance and generating the device data stream construct; otherwise, matching the presentation characteristics of the interchange receivers with the permitted layout constructs of the logical element instance and generating the interchange data stream construct.

4. A method for utilizing a presentation document structure for interchange comprising the steps of:

generating a data stream intermediate a revisable document data stream and a final-form document data stream; and

creating at an end user or device a specific instance of a document defined by said intermediate data stream based on specific characteristics of the end user or device.

5. The method recited in claim 4 wherein the step of creating is performed by making a best fit of end user or device characteristics with a general document specification contained in said intermediate data stream.

6. Processing a document data stream which includes a general layout structure of a document and specific instances of logical elements in the document comprising the steps of:

interpreting each instance of a logical element in the data stream to determine if choices exist for the format of an interpreted instance of the logical element in the general layout structure; and

where choices exist, determining the specific characteristics of a final-form receiver and permissible layout constructs from the general layout structure.

7. Processing a document data stream as recited in claim 6 wherein if the final-form receiver is a specific class of device server, the step of determining is performed by matching the device characteristics with permitted device layout constructs associated with the logical element instance.

8. Processing a document data stream as recited in claim 6 wherein if the final-form receiver is not a specific class device server, the step of determining is performed by matching presentation characteristics of the receiver with permitted presentation constructs of the logical element instance.

TITLE PAGE

AREA 1

FIG.1A

ABSTRACT PAGE

AREA 2

AREA 3

FIG.1B

PREFACE PAGE

AREA 4

AREA 5

FIG.1C

TABLE OF CONTENTS
PAGE

AREA 6

FIG.1D

TABLE OF FIGURES
PAGE

AREA 7

FIG.1E

BODY PAGE

AREA 8

AREA 9

AREA a

AREA b

FIG.1F

INDEX PAGE

AREA
c

AREA
d

FIG.1G

EP 0 349 461 A2

FIG.2

(A)

DOCUMENT

(B)

TITLE
PAGE

ABSTRACT
PAGE

PREFACE
PAGE

TABLE OF
CONTENTS
PAGE

TABLE OF
FIGURES
PAGE

BODY
PAGE

INDEX
PAGE

(C)

AREA 1

AREA 2

AREA 3

AREA 4

AREA 5

AREA 6

AREA 7

AREA 8

AREA 9

AREA o

AREA b

AREA c

AREA d

(D)

DATA

DATA

DATA

DATA

DATA

DATA

DATA

EP 0 349 461 A2

## FIG.3

FIG.4